# EUROPEAN PATENT APPLICATION

(11) **EP 4 007 026 A1**
(43) Date of publication of application: **01.06.2022**
(21) Application number: 21209286.0
(22) Date of filing: 19.11.2021
(51) Int. Cl.: H01M 10/04, H01M 50/109, H01M 50/181, H01M 50/183, H01M 50/186, H01M 50/197, H01M 10/0587

(54) **RECHARGEABLE BATTERY**

(30) Priority: 25.11.2020 KR 20200160188
(71) Applicant: Samsung SDI Co., Ltd., Yongin-si, Gyeonggi-do 17084 (KR)
(72) Inventor: Park, Joonhong, 17084 Yongin-si, Gyeonggi-do (KR); Son, Hee-Myeong, 17084 Yongin-si, Gyeonggi-do (KR)
(74) Representative: Gulde & Partner

(57) **Abstract**

One aspect of the present invention is to provide a rechargeable battery (100, 200) that simplifies a process of connecting an electrode tab (51, 52) of an electrode assembly (10) to a terminal plate (33, 63) or a case (20). A rechargeable battery (100, 200) according to an embodiment of the present invention includes: an electrode assembly (10) having a first electrode tab (51) and a second electrode tab (52); a case (20) accommodating the electrode assembly (10) and electrically connected to the first electrode tab (51); a cap assembly (30, 60) including a cap plate (31) coupled to the opening of the case (20) and a terminal plate (33, 63) coupled to the cap plate (31) in an insulating state and electrically connected to the second electrode tab (52); and a conductive double-sided adhesive member (40) applied to at least one of a first connection of the first electrode tab (51) and the case (20) and a second connection of the second electrode tab (52) and the terminal plate (33, 63).

## Description

### BACKGROUND OF THE INVENTION

### (a) Field of the Invention

The present invention relates to a rechargeable battery. More particularly, the present invention relates to an ultra-small rechargeable battery.

### (b) Description of the Related Art

Unlike a primary battery that is incapable of being recharged, a rechargeable battery can be repeatedly charged and discharged. A low capacity rechargeable battery has been used for small electronic devices such as a mobile phone, a laptop computer, and a camcorder, and a large capacity battery has been widely used as a power source for driving a motor of a hybrid vehicle.

A representative rechargeable battery includes a nickel-cadmium (Ni-Cd) battery, a nickel-hydrogen (Ni-MH) battery, a lithium (Li) battery, and a lithium ion (Li-ion) rechargeable battery. Particularly, the lithium ion secondary battery has a higher operation voltage than the nickel-cadmium battery or the nickel-hydrogen battery that is mainly used as a portable electric equipment power source by about three times. Also, the lithium ion secondary battery is widely used in an aspect that energy density per unit weight is high.

In particular, as a demand for wearable devices such as headphones, earphones, smartwatches, and body-mounted medical devices which use Bluetooth has increased, the need for rechargeable batteries of which energy density is high and is ultra-small is increasing.

The ultra-small rechargeable battery has important tasks of securing required electrical capacity within a limited size, implementing an efficient structure while improving an effective low weight, and improving structural stability.

The above information disclosed in this Background section is only for enhancement of understanding of the background of the invention, and therefore it may contain information that does not form the prior art that is already known in this country to a person of ordinary skill in the art.

### SUMMARY OF THE INVENTION

One aspect of the present invention is to provide a rechargeable battery that has a simplified process of connecting an electrode tab of an electrode assembly to a terminal plate or a case. Also, one aspect of the present invention is to provide a rechargeable battery that has a simplified process of connecting an external tab of the rechargeable battery to a set.

A rechargeable battery according to an embodiment of the present invention includes: an electrode assembly having a first electrode tab and a second electrode tab; a case accommodating the electrode assembly and electrically connected to the first electrode tab; a cap assembly including a cap plate coupled to the opening of the case and a terminal plate coupled to the cap plate in an insulating state and electrically connected to the second electrode tab; and a conductive double-sided adhesive member applied to at least one of a first connection of the first electrode tab and the case and a second connection of the second electrode tab and the terminal plate.

The conductive double-sided adhesive member may be formed of a conductive double-sided tape.

The conductive double-sided tape may include a conductive mesh part formed in a mesh structure with conductivity, and a rubber adhesive filled around the conductive mesh part to form the first connection and the second connection.

The conductive double-sided adhesive member may be formed of an anisotropic conductive film.

The first connection may electrically and mechanically connect both with a first conductive double-sided tape interposed between the lower surface of the first electrode tab and the inner surface of the case facing each other.

The second connection may electrically and mechanically connect both with a second conductive double-sided tape interposed between the upper surface of the second electrode tab and the lower surface of the terminal plate facing each other.

The terminal plate may include a flange part disposed on the outside (e.g. in relation to the rechargeable battery (or an internal part thereof)) of the cap plate, and electrically insulated and attached to the outer surface (e.g. in relation to the rechargeable battery) of the cap plate by interposing a thermal fusion member. The terminal plate may include a tab connection part protruded from the center of the flange part to the inside (e.g. of the flange part or the rechargeable battery, respectively) and protruded toward the electrode assembly through a through hole of the thermal fusion member and a terminal hole of the cap plate. The second conductive double-sided tape may be electrically and mechanically connected between the second electrode tab and the inner surface (e.g. in relation to the rechargeable battery) of the tab connection part.

The terminal plate may include a flange part disposed on the inside (e.g. in relation to the rechargeable battery) of the cap plate and electrically insulatingly attached to the inner surface (e.g. in relation to the rechargeable battery) of the cap plate through a thermal fusion member interposed therebetween. The terminal plate may include a protruded terminal protruded from the center of the flange part to the outside (e.g. of the flange part or the rechargeable battery, respectively) and passed through a through hole of the thermal fusion member and a terminal hole of the cap plate. The second conductive double-sided tape may be mechanically and electrically connected between the second electrode tab and the inner surface (e.g. in relation to the rechargeable battery) of the flange part.

The terminal plate may include a flange part disposed on the outside (e.g. in relation to the rechargeable battery) of the cap plate, and electrically insulated and attached to the outer surface (e.g. in relation to the rechargeable battery) of the cap plate by interposing a thermal fusion member. The terminal plate may include a tab connection part protruded from the center of the flange part to the inside of the flange part (e.g. or the rechargeable battery, respectively) and protruded toward the electrode assembly through a through hole of the thermal fusion member and a terminal hole of the cap plate. In a third connection connecting the terminal plate to a set, a conductive double-sided adhesive member may be connected between a first external tab connected to the outer surface (e.g. in relation to the rechargeable battery) of the flange part and the set.

The terminal plate may include a flange part disposed on the inside (e.g. in relation to the rechargeable battery) of the cap plate and electrically insulated and attached to the inner surface (e.g. in relation to the rechargeable battery) of the cap plate through a thermal fusion member interposed therebetween The terminal plate may include a protruded terminal protruded from the center of the flange part to the outside (e.g. of the flange part or the rechargeable battery, respectively) and passed through a through hole of the thermal fusion member and a terminal hole of the cap plate. In a third connection connecting the terminal plate to a set, a conductive double-sided adhesive member may be connected between the first external tab connected to the outer surface (e.g. in relation to the rechargeable battery) of the protruded terminal and the set.

In a fourth connection that connects the case to the set, a conductive double-sided adhesive member may be connected between a second external tab connected to the outer surface of the case (e.g. in relation to the rechargeable battery) and the set.

As such, the rechargeable battery according to an embodiment of the present invention applies the conductive double-sided adhesive member to at least one of the first connection of the first electrode tab and the case and the second connection of the second electrode tab and the terminal plate, so the process of connecting the first and second electrode tabs to the terminal plate or the case may be simplified.

In addition, since the rechargeable battery of an embodiment applies the conductive double-sided adhesive member to the connection between the external tab of the rechargeable battery and the set, the process of connecting the external tab to the set may be simplified.

All embodiments described in this specification may be advantageously combined with one another to the extent that their respective features are compatible. In particular, the expression "according to an embodiment" means that the respective features may or may not be part of specific embodiments of the present invention.

### BRIEF DESCRIPTION OF THE DRAWINGS

FIG. 1 is a perspective view showing a rechargeable battery according to a first embodiment of the present invention.
FIG. 2 is an exploded perspective view of a rechargeable battery of FIG. 1.
FIG. 3 is a cross-sectional view taken along a line III-III of FIG. 1.
FIG. 4 is an enlarged cross-sectional view of a part electrically and mechanically connecting a second electrode tab and a terminal plate with a second conductive double-sided tape applied to FIG. 2 and FIG. 3.
FIG. 5 is a perspective view showing a rechargeable battery according to a second embodiment of the present invention.
FIG. 6 is an exploded perspective view of a rechargeable battery of FIG. 5.
FIG. 7 is a cross-sectional view taken along a line VII-VII of FIG. 5.
FIG. 8 is a cross-sectional view of electrically connecting an external tab and a set of a rechargeable battery of a first embodiment.
FIG. 9 is a cross-sectional view of electrically connecting an external tab and a set of a rechargeable battery of a second embodiment.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

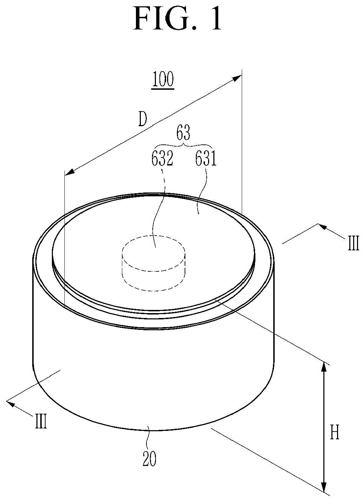

A rechargeable battery according to an embodiment of the present invention, which is an ultra-compact battery, may be a coin cell or a button cell. Here, the coin cell or the button cell is a thin coin-type or button-type cell, and means a battery having a ratio (H/D) of a height (H) to a diameter (D) of 1 or less (referring to FIG. 1).

Since the coin cell or the button cell is mainly cylindrical, a horizontal cross-section is circular, but the present invention is not limited thereto, and a horizontal cross-section may be oval or polygonal. In this case, a diameter is determined as a maximum distance of a housing (or a case) exterior circumference based on the horizontal direction of the battery, and a height is determined as a maximum distance (a distance from the flat bottom to the flat top cross-section) based on the vertical direction of the battery.

However, the present invention is not limited to the coin cell or the button cell that is an example of the present invention, and a battery of the present invention may be a cylindrical-type or pin-type battery. Hereinafter, a case in which a rechargeable battery according to an embodiment of the present invention is a coin cell or a button cell will be exemplarily described in detail.

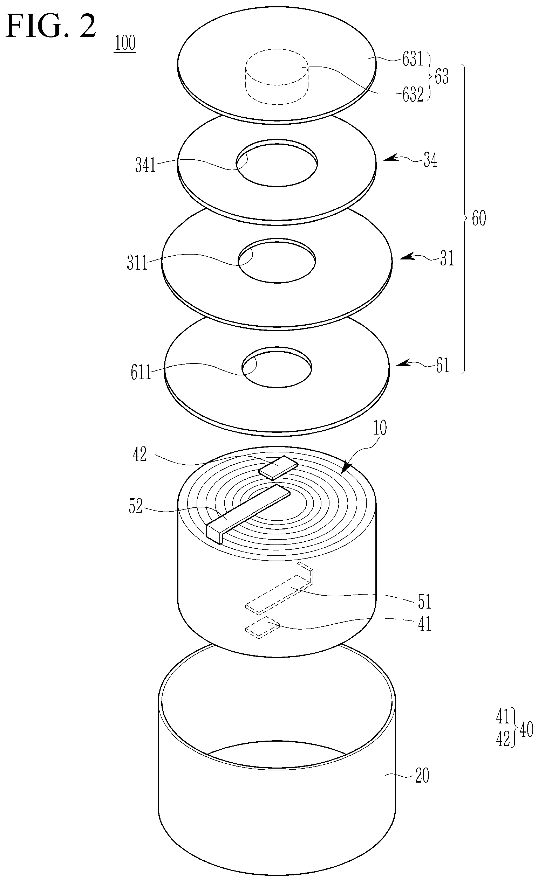

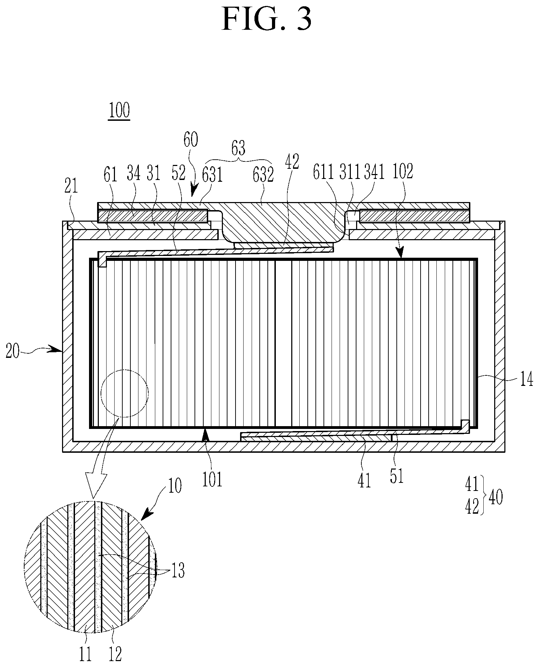

FIG. 1 is a perspective view showing a rechargeable battery according to a first embodiment of the present invention, FIG. 2 is an exploded perspective view of a rechargeable battery of FIG. 1, and FIG. 3 is a cross-sectional view taken along a line III-III of FIG. 1. Referring to FIG. 1 to FIG. 3, the rechargeable battery 100 of the first embodiment includes an electrode assembly 10, a case 20, a cap assembly 60, and a conductive double-sided adhesive member 40.

The cap assembly 60 includes a cap plate 31 and a terminal plate 63 that are coupled together. As an example, the cap plate 31 and the terminal plate 63 are heat-sealed by a thermal fusion member 34 that is disposed between them.

The thermal fusion member 34 acts as a mediator for bonding the cap plate 31 and the terminal plate 63 to each other. For example, the thermal fusion member 34 may be formed of an electrically insulating material such as a polymer, and may be melted using a laser or the like and fused to the cap plate 31 and the terminal plate 63.

The first embodiment may form a stable sealing and bonding structure while effectively insulating between terminal plate 63 and cap plate 31 without adding a separate insulating configuration by combining the terminal plate 63 to the cap plate 31 with the thermal fusion member 34.

The electrode assembly 10 includes a first electrode (11, for example, a negative electrode) and a second electrode (12, for example, a positive electrode) provided on respective surfaces of a separator 13, which is an electrical insulating material, and is formed by winding the first electrode 11, the separator 13, and the second electrode 12. Accordingly, the electrode assembly 10 may be formed as a jelly-roll type. Although not shown separately, the electrode assembly may be formed as a stack type.

The electrode assembly 10 is configured to charge and discharge a current, and in the electrode assembly 10, the wound axis may be arranged parallel to the height direction of the case 20 (an up and down direction in FIG. 1 to FIG. 3).

The first end (a lower cross-section of the electrode assembly) 101 and the second end (an upper cross-section of the electrode assembly) 102 of the electrode assembly 10 may be flat and parallel to each other. In the first embodiment, the electrode assembly 10 is not provided with a center pin, but may be provided with a center pin (not shown) at the position of the wound axis.

The case 20 accommodates the electrode assembly 10 while facing the first end 101 of both ends of the electrode assembly 10 with the bottom inner surface. At this time, the electrode assembly 10 is coated with an insulating sheet 14 on the first and second ends 101 and 102 and the sides and is embedded with an electrolyte solution in the case 20. As an example, case 20 is formed as a cylinder accommodating the electrode assembly 10 of a jelly-roll type, and the cap assembly 60 closes and seals the opening 21 of the cylindrical case 20.

The electrode assembly 10 includes a first electrode tab 51 connected to the first electrode 11 and a second electrode tab 52 connected to the second electrode 12, and draws out the first and second electrodes 11 and 12 into the first and second ends 101 and 102, respectively.

In the state that the electrode assembly 10 is accommodated in the case 20, the first electrode tab 51 is firstly electrically and mechanically connected to the bottom inner surface of the case 20, and the second electrode tab 52 is secondly electrically and mechanically connected to the inner surface of the terminal plate 63 of the cap assembly 60.

And the cap plate 31 of the cap assembly 60 is coupled to the case 20 while facing the second end 102 of both ends of the electrode assembly 10 to cover the opening 21. At this time, the terminal plate 63 is secondly connected to the second electrode tab 52 in the state that it is coupled to the cap plate 31 with the thermal fusion member 34.

The first connection connects the first electrode tab 51 and the case 20 to each other through a conductive double-sided adhesive member 40. The second connection connects the second electrode tab 52 and the terminal plate 63 to each other through a conductive double-sided adhesive member 40.

The conductive double-sided adhesive member 40 may be formed of a conductive double-sided tape or an anisotropic conductive film (ACF), which facilitates the process of the first and second connections. For convenience, the conductive double-sided tape is used as an example.

Hereinafter, the case where the first electrode 11 and the second electrode 12 are the negative electrode and the positive electrode is described as an example, but the present invention is not limited thereto, and the first electrode 11 and the second electrode 12 may be the positive electrode and the negative electrode, respectively.

The first electrode (the negative electrode) 11 is formed in a long extending strip shape, and includes a negative electrode coated portion that is a region in which a negative electrode active material layer is coated to a current collector of a metal foil (for example, a Cu foil) and a negative electrode uncoated portion that is a region in which an active material is not coated. The negative electrode uncoated portion may be disposed at one end portion in a length direction of the negative electrode.

The second electrode (positive electrode) 12 is formed in a long extending strip shape, and includes a positive electrode coated portion that is a region in which a positive electrode active material layer is coated to a current collector of a metal foil (for example, an AI foil) and a positive electrode uncoated portion that is a region in which an active material is not coated. The positive electrode uncoated portion may be disposed at one end portion in a length direction of the positive electrode.

The case 20 allows the electrode assembly 10 to be inserted into the opening 21 formed at one side thereof, and has a space for accommodating the electrode assembly 10 and an electrolyte therein. For example, the case 20 is formed in a cylindrical shape having a lower height H than a diameter D thereof, and has a circular opening 21 so that the cylindrical electrode assembly 10 corresponding to an inner space thereof is inserted.

The terminal plate 63 of the cap assembly 60 includes a flange part 631 and a tab connection part 632. The flange part 631 is disposed to the outside of the cap plate 31 and is electrically insulated and attached to the outer surface of the cap plate 31 by interposing a thermal fusion member 34 therebetween.

In the terminal plate 63, the tab connection part 632 is protruded from the center of the flange part 631 to the inside, and passes through the through hole 341 of the thermal fusion member 34 and the terminal hole 311 of the cap plate 31 to be protruded toward the electrode assembly 10, and the second electrode tab 52 is electrically and mechanically connected to the inner surface of the tab connection part 632.

More specifically, the first connection electrically and mechanically connects them with the first conductive double-sided tape 41 interposed between the lower surface of the first electrode tab 51 and the inner surface of the case 20 facing each other. The first conductive double-sided tape 41 makes the process of the first connection simple and convenient, and improves the deterioration of electrical characteristics due to poor welding.

The second connection electrically and mechanically connects them with a second conductive double-sided tape 42 interposed between the upper surface of the second electrode tab 52 and the lower surface of the terminal plate 63 facing each other. That is, the second connection is made of a second conductive double-sided tape 42 interposed between the upper surface of the second electrode tab 52 and the lower surface of the tab connection part 632 facing each other. The second conductive double-sided tape 42 makes the process of the second connection simple and convenient, and improves the deterioration of electrical characteristics due to poor welding.

The first and second connections using the first and second conductive double-sided tapes 41 and 42 prevent a metal welding foreign substance and heat that may occur during laser welding, ultrasonic welding, or resistance welding, thus eliminating the risk of safety inside the battery. The first and second connections prevent the deterioration of the battery characteristics due to poor welding according to a condition state of the case 20 and the cap assembly 60 during the welding process. The first and second connections are possible with a degree of supplying the first and second conductive double-sided tapes 41 and 42 through feeders and using an attachment jig, so a simpler facility is required compared to an existing welding facility.

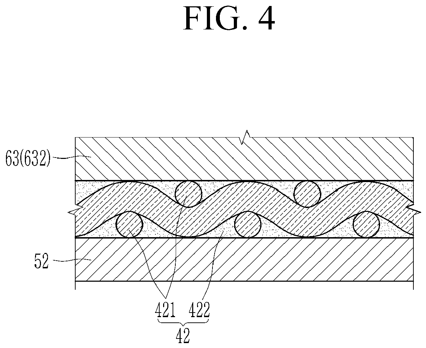

FIG. 4 is an enlarged cross-sectional view of a part for an electrical and mechanical connection between a second electrode tab and a terminal plate with a second conductive double-sided tape applied to FIG. 2 and FIG. 3. The first and second connections form the same configuration, so the second connection is described with reference to FIG. 4.

As an example, the second conductive double-sided tape 42 includes a conductive mesh part 421 having conductivity and formed into a mesh structure, and a rubber adhesive 422 filled around the conductive mesh part 421 to form the second connection. Since the rubber adhesive 422 does not react with the electrolyte solution, the second connection may be maintained continuously.

Meanwhile, the insulating member 61 is provided between the second electrode tab 52 and the cap plate 31. As an example, the insulating member 61 is disposed on the upper side of the second electrode tab 52 and is attached to the inner surface of the cap plate 31. The insulating member 61 may form an electrically insulating structure between the cap plate 31 and the second electrode tab 52 and between the cap plate 31 and the electrode assembly 10.

As an example, the insulating member 61 has a through hole 611 corresponding to the terminal hole 311 of the cap plate 31. Therefore, the tab connection part 632 is protruded from the center to the inside of the flange part 631 and passes through the terminal hole 311 of the cap plate 31 and the through hole 611 of the insulating member 61 to be protruded toward the electrode assembly 10, and the second electrode tab 52 is electrically and mechanically connected to the inner surface of the tab connection part 632 with a second conductive double-sided tape 42 interposed therebetween.

On the other hand, referring to FIG. 1, in the rechargeable battery 100 of the first embodiment, in the state of closing and sealing the opening 21 of the case 20 with the cap assembly 60, the height H is set as the distance between the outer planes of the case 20 and the flange part 631, and the battery diameter D is set with the exterior circumference of the case 20. At this time, the ratio of the height H to the battery diameter D is 1 or less (H/D≤1). Therefore, the rechargeable battery 100 of the first embodiment may form a thin coin or button type as a coin-type battery or a button-type battery.

Hereinafter, a second embodiment of the present invention is described. Comparing the first and second embodiments, the same configurations are omitted, and different configurations are described in the second embodiment.

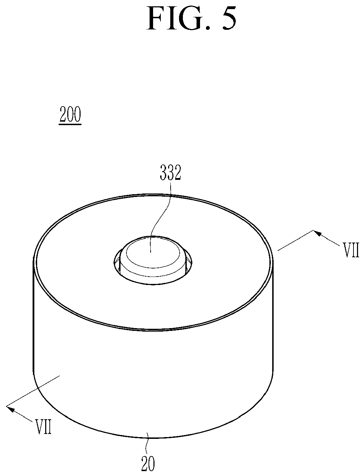

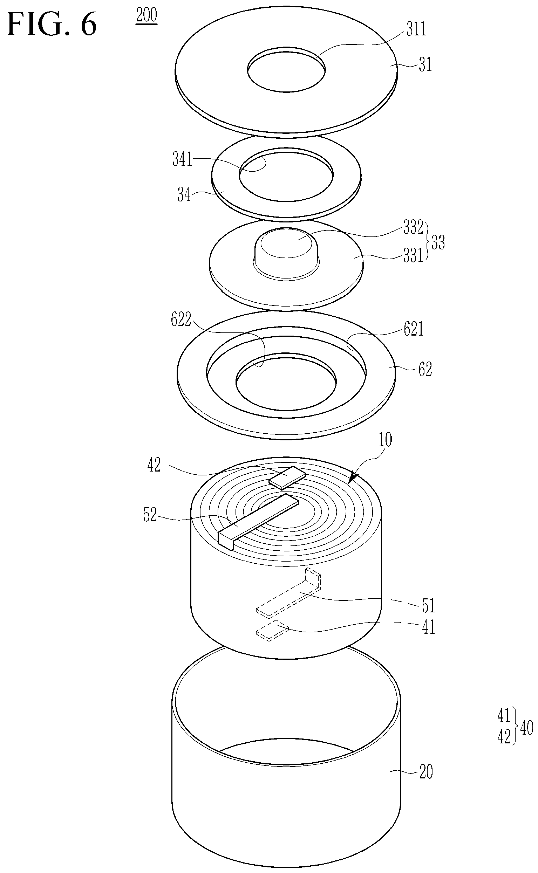

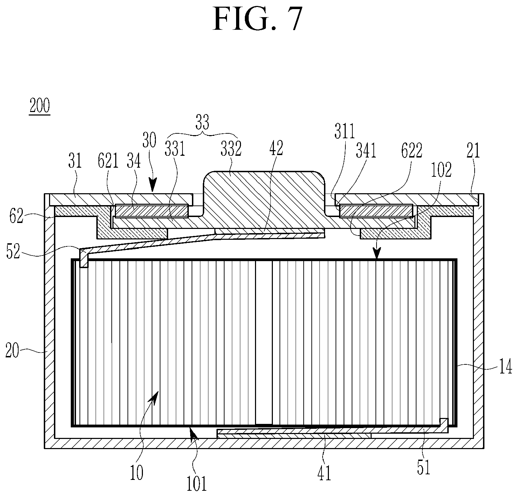

FIG. 5 is a perspective view showing a rechargeable battery according to a second embodiment of the present invention, FIG. 6 is an exploded perspective view of a rechargeable battery of FIG. 5, and FIG. 7 is a cross-sectional view taken along a line VII-VII of FIG. 5.

Referring to FIG. 5 to FIG. 7, in the cap assembly 30 of the rechargeable battery 200 according to the second embodiment, the terminal plate 33 includes a flange part 331 and a protruded terminal 332. The flange part 331 is disposed between the cap plate 31 and the electrode assembly 10, disposed inside the step 621 of the insulating member 62, and electrically insulated and attached to the inner surface of the cap plate 31 with the thermal fusion member 34 interposed therebetween.

In the terminal plate 33, the protruded terminal 332 is protruded from the center to the outside of the flange part 331 to pass through the through hole 341 of the thermal fusion member 34 and the terminal hole 311 of the cap plate 31, and the second electrode tab 52 is electrically and mechanically connected to the inner surface of the flange part 331 with the second conductive double-sided tape 42 interposed therebetween.

The second connection is electrically and mechanically connected with a second conductive double-sided tape 42 interposed between the upper surface of the second electrode tab 52 and the lower surface of the terminal plate 63 facing each other. That is, the second connection is made with the second conductive double-sided tape 42 interposed between the upper surface of the second electrode tab 52 and the lower surface of the flange part 331 facing each other. The second conductive double-sided tape 42 makes the process of second connection simple and convenient, and improves the deterioration of electrical characteristics due to poor welding.

The insulating member 62 is disposed on the upper side of the second electrode tab 52, is attached to the inner surface of the cap plate 31, and further extends to the inner surface of the flange part 331. The insulating member 62 may form an electrically insulating structure between the cap plate 31 and the second electrode tab 52, between the cap plate 31 and the electrode assembly 10, and between the flange part 331 and the electrode assembly 10.

As an example, the insulating member 62 has the step 621 corresponding to the exterior diameter of the thermal fusion member 34. Therefore, the protruded terminal 332 is protruded outward from the center of the flange part 331 and protruded outward through the through hole 341 of the thermal fusion member 34 and the terminal hole 311 of the cap plate 31. The flange part 331 is electrically and mechanically connected to the second electrode tab 52 with the second conductive double-sided tape 42 on the opened inner surface through the through hole 622 of the insulating member 62.

Hereinafter, embodiments for simplifying the process of connecting the external tab of the rechargeable battery to the set are described.

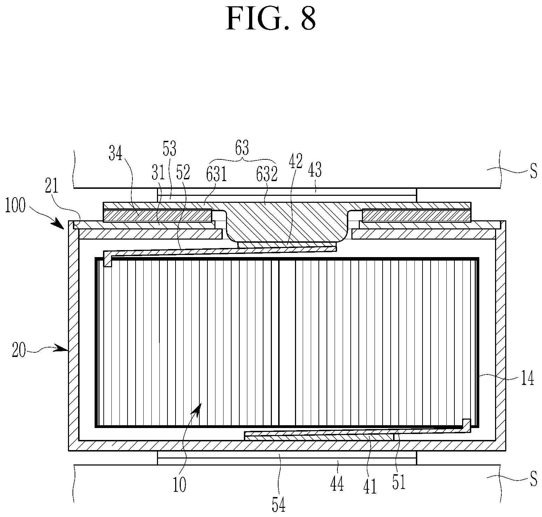

FIG. 8 is a cross-sectional view of electrically connecting an external tab and a set of a rechargeable battery of a first embodiment. Referring to FIG. 8, the third connection and the fourth connection electrically connect the first external tab 53 and the second external tab 54 of the rechargeable battery 100 to the set S, respectively.

The third connection connects the terminal plate 63 to the set S, specifically, the conductive double-sided adhesive member, that is, the third conductive double-sided tape 43 is connected between the first external tab 53 connected to the outer surface of the flange part 631 and the set S.

The fourth connection connects the case 20 to the set S, specifically the conductive double-sided adhesive member, that is, a fourth conductive double-sided tape 44 is connected between the second external tab 54 connected to the outer surface of the case 20 and the set S.

The third and fourth conductive double-sided tapes 43 and 44 simplify and make the process of the third and fourth connection connecting the first and second external tab 53 and 54 of the rechargeable battery 100 to the set S convenient, and improve the deterioration of the electrical characteristics due to poor welding.

In addition, the third and fourth connections are possible to the extent of supplying the third and fourth conductive double-sided tape 43 and 44 through the feeder and using an attachment jig, so a simpler facility is required compared to the existing welding facility.

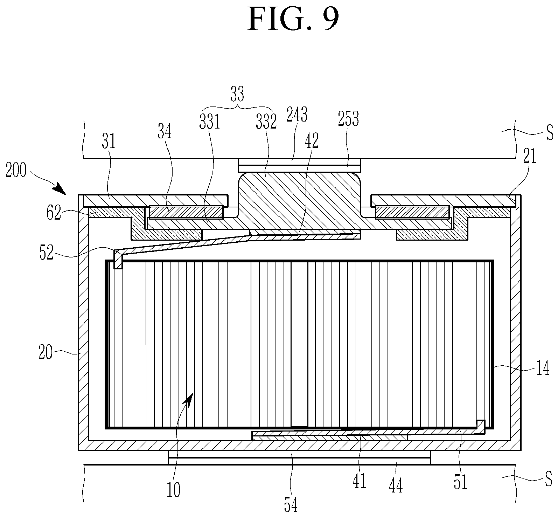

FIG. 9 is a cross-sectional view of electrically connecting an external tab and a set of a rechargeable battery of a second embodiment. Referring to FIG. 9, the third connection connects the terminal plate 33 to the set S, in detail, the conductive double-sided adhesive member, that is, the third conductive double-sided tape 243 is connected between the first external tab 253 connected to the outer surface of the protruded terminal 332 and the set S.

The third conductive double-sided tape 243 makes the process of the third connection connecting the first external tab 253 of the rechargeable battery 200 to the set S simple and convenient, and improves the deterioration of electrical characteristics due to poor welding.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

It is clear for a person skilled in the art that the disclosed embodiments can also be combined where possible.

**<Description of symbols>**

| | | | |
|---|---|---|---|
| 10: | electrode assembly | 11: | first electrode (negative electrode) |
| 12: | second electrode (positive electrode) | 13: | separator |
| 20: | case | 21: | opening |
| 30, 60: | cap assembly | 31: | cap plate |
| 33, 63: | terminal plate | 34: | thermal fusion member |
| 40: | conductive double-sided adhesive member sidedtape | 41: | first conductive double- |
| 42: | second conductive double-sided tape | 43, 243: | third conductive double-sided tape |
| 44: | fourth conductive double-sided tape | 51: | first electrode tab |
| 52: | second electrode tab | 53, 253: | first external tab |
| 54: | second external tab | 61, 62: | insulating member |
| 100, 200: | rechargeable battery | 101: | first end (lower cross-section) |
| 102: | second end (upper cross-section) | 311: | terminal hole |
| 331, 631: | flange part | 332: | protruded terminal |
| 341: | through hole | 421: | conductive mesh part |
| 422: | rubber adhesive | 611, 622: | through hole |
| 621: | step | 632: | tab connection part |
| D: | battery diameter | H: | height |
| S: | set | | |

## Claims

1. A rechargeable battery (100, 200) comprising:
an electrode assembly (10) having a first electrode tab (51) and a second electrode tab (52);
a case (20) accommodating the electrode assembly (10) and electrically connected to the first electrode tab (51);
a cap assembly (30, 60) including a cap plate (31) coupled to the opening of the case (20) and a terminal plate (33, 63) coupled to the cap plate (31) in an insulating state and electrically connected to the second electrode tab (52); and
a conductive double-sided adhesive member (40) applied to at least one of a first connection of the first electrode tab (51) and the case (20) and a second connection of the second electrode tab (52) and the terminal plate (33, 63).

2. The rechargeable battery (100, 200) of claim 1, wherein
the conductive double-sided adhesive member (40) is formed of a conductive double-sided tape (41, 42).

3. The rechargeable battery (100, 200) of claim 2, wherein
the conductive double-sided tape (41, 42) includes
a conductive mesh part (421) formed in a mesh structure with conductivity, and
a rubber adhesive (422) filled around the conductive mesh part (421) to form the first connection and the second connection.

4. The rechargeable battery (100, 200) of claim 1, wherein
the conductive double-sided adhesive member (40) is formed of an anisotropic conductive film.

5. The rechargeable battery (100, 200) of any one of the preceding claims, wherein
the first connection electrically and mechanically connects both with a first conductive double-sided tape (41) interposed between the lower surface of the first electrode tab (51) and the inner surface of the case (20) facing each other.

6. The rechargeable battery (100, 200) of any one of the preceding claims, wherein
the second connection electrically and mechanically connects both with a second conductive double-sided tape (42) interposed between the upper surface of the second electrode tab (52) and the lower surface of the terminal plate (33, 63) facing each other.

7. The rechargeable battery (100) of any one of claims 1 to 6, wherein
the terminal plate (63) includes
a flange part (631) disposed on an outside of the cap plate (31), and electrically insulated and attached to an outer surface of the cap plate (31) by interposing a thermal fusion member (34), and
a tab connection part (632) protruded from a center of the flange part (631) to an inside of the flange part (631) and protruded toward the electrode assembly (10) through a through hole (341) of the thermal fusion member (34) and a terminal hole (311) of the cap plate (31), and
the second conductive double-sided tape (42) is electrically and mechanically connected between the second electrode tab (52) and an inner surface of the tab connection part (632).

8. The rechargeable battery (200) of any one of claims 1 to 6, wherein
the terminal plate (33) includes
a flange part (331) disposed on an inside of the cap plate (31) and electrically insulatingly attached to an inner surface of the cap plate (31) through a thermal fusion member (34) interposed therebetween, and
a protruded terminal (332) protruded from a center of the flange part (331) to an outside of the flange part (331) and passed through a through hole (341) of the thermal fusion member (34) and a terminal hole (311) of the cap plate (31), and
the second conductive double-sided tape (42) is mechanically and electrically connected between the second electrode tab (52) and an inner surface of the flange part (331).

9. The rechargeable battery (100) of any of one of claims 1 to 6, wherein
the terminal plate (63) includes
a flange part (631) disposed on an outside of the cap plate (31), and electrically insulated and attached to an outer surface of the cap plate (31) by interposing a thermal fusion member (34), and
a tab connection part (632) protruded from a center of the flange part (631) to an inside of the flange part (631) and protruded toward the electrode assembly (10) through a through hole (341) of the thermal fusion member (34) and a terminal hole of the cap plate (31), wherein
a conductive double-sided adhesive member (40, 43) is connected between a first external tab (53) connected to an outer surface of the flange part (631) and a set (S) in a third connection connecting the terminal plate (63) to the set (S).

10. The rechargeable battery (100) of claim 9, wherein
a conductive double-sided adhesive member (40, 44) is connected between a second external tab (54) connected to an outer surface of the case (20) and the set (S) in a fourth connection that connects the case (20) to the set (S).

11. The rechargeable battery (200) of any one of claims 1 to 6, wherein
the terminal plate (33) includes
a flange part (331) disposed on an inside of the cap plate (31) and electrically insulated and attached to an inner surface of the cap plate (31) through a thermal fusion member (34) interposed therebetween, and
a protruded terminal (332) protruded from a center of the flange part (331) to an outside of the flange part (331) and passed through a through hole (341) of the thermal fusion member (34) and a terminal hole of the cap plate (31), wherein
a conductive double-sided adhesive member (40, 243) is connected between the first external tab (253) connected to an outer surface of the protruded terminal (332) and a set (S) in a third connection connecting the terminal plate (33) to the set (S).

12. The rechargeable battery (200) of claim 11, wherein
a conductive double-sided adhesive member (40, 44) is connected between a second external tab (54) connected to an outer surface of the case (20) and the set (S) in a fourth connection that connects the case (20) to the set (S).
